(19) Europäisches Patentamt
European Patent Office
Office européen des brevets

(11) **EP 4 603 946 A1**

(12) **EUROPÄISCHE PATENTANMELDUNG**

(43) Veröffentlichungstag:
**20.08.2025   Patentblatt 2025/34**

(21) Anmeldenummer: **24158343.4**

(22) Anmeldetag: **19.02.2024**

(51) Internationale Patentklassifikation (IPC):
***G05D 23/19*** *(2006.01)*

(52) Gemeinsame Patentklassifikation (CPC):
**G05D 23/1923; G05D 23/1925; G05D 23/1934**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Schütz, Thomas**
**90765 Fürth (DE)**

• **Amthor, Arvid**
**98631 Grabfeld OT Nordheim (DE)**
• **Schreck, Sebastian**
**90429 Nürnberg (DE)**
• **Sudhoff, Robin**
**91052 Erlangen (DE)**
• **Zupan, Nejc**
**80337 München (DE)**

(74) Vertreter: **Siemens Patent Attorneys**
**Postfach 22 16 34**
**80506 München (DE)**

(54) **TEMPERIERUNG EINES GEBÄUDES**

(57)     Es wird ein Verfahren zum Betrieb eines Temperierungssystems (5) für ein Gebäude (1) angegeben, wobei das Temperierungssystem (1) eine Mehrzahl von unabhängig voneinander steuerbaren Temperierungsgeräten (11,21) umfasst,

wobei das Verfahren die folgenden Schritte umfasst:

a) Bereitstellen eines thermischen Modells (M) des Gebäudes (1), wobei das Gebäude (1) in dem Modell (M) in eine Mehrzahl von Zonen (10,20) unterteilt ist, denen jeweils wenigstens ein Temperierungsgerät (11,21) zugeordnet ist,

wobei das thermische Modell (M) geeignet ist, für die jeweilige Zone (10,20) in Abhängigkeit von einem zeitabhängigen Betriebsparametersatz (P) des Temperierungssystems (5) ein zeitabhängiges Raumtemperaturprofil vorherzusagen,

wobei die zur jeweiligen Zone (10,20) zugehörigen Gebäudeteile in dem thermischen Modell (M) jeweils durch wenigstens eine separate thermische Masse (m) mit einer Wärmekapazität ($C_m$) repräsentiert sind,

b) Bereitstellen einer Zielfunktion (Z) für ein Optimierungsverfahren, wobei die Zielfunktion (Z) wenigstens ein Optimierungskriterium (c2) enthält, welches direkt oder indirekt von zeitlichen Verläufen von Leistungsaufnahmen der Temperierungsgeräte (11,21) abhängt,

c) Extremalisieren der Zielfunktion (Z) auf Basis von computergestützt ermittelten Vorhersagewerten auf Grundlage des thermischen Modells (M), wodurch ein optimierter zeitabhängiger Betriebsparametersatz (P) erhalten wird, sowie

d) Betrieb der Temperierungsgeräte (11,21) des Temperierungssystems (5) gemäß dem optimierten zeitabhängigen Betriebsparametersatz (P).

FIG 4

EP 4 603 946 A1

**Beschreibung**

Die vorliegende Erfindung betrifft ein Verfahren zum Betrieb eines Temperierungssystems für ein Gebäude, wobei das Temperierungssystem eine Mehrzahl von unabhängig voneinander steuerbaren Temperierungsgeräten umfasst. Weiterhin betrifft die Erfindung ein solches Temperierungssystem.

Aus dem Stand der Technik sind zahlreiche Temperierungssysteme und insbesondere Heizsysteme für Gebäude bekannt, mit denen unterschiedliche Zonen des Gebäudes auf verschiedene Temperaturbereiche eingestellt werden können. Bei einer hydronischen Zentralheizung wird Wasser in einer zentralen Heizstelle erwärmt und für den Wärmetransport in einzelne Heizkörper im Bereich der zu heizenden Zonen genutzt. Die separate Temperierung dieser Zonen wird durch lokale Thermostate im Bereich der Heizkörper erreicht. Die Heizkörperthermostate können gegebenenfalls als elektronische Funkthermostate ausgeführt sein und auf diese Weise eine drahtlose Temperaturregelung für die einzelnen Zonen durch ein übergeordnetes Steuerungssystem ermöglichen. So können für unterschiedliche Zonen des Gebäudes je nach ihrer Nutzung unterschiedliche zeitabhängige Temperaturverläufe vorgegeben werden. Eine solche getrennte Regelbarkeit der Temperaturen einzelner Zonen führt meist zu einem energieeffizienteren Betrieb des gesamten Heizsystems. Die zentralen Heizstellen solcher Zentralheizungen werden häufig mit fossilen Energieträgern wie Heizöl oder Erdgas oder auch mit Holzpellets betrieben. Im Rahmen der Energiewende kommen heutzutage vermehrt Wärmepumpen als Wärmeerzeuger zum Einsatz. Alternativ zu solchen Zentralheizungen werden in letzter Zeit auch häufiger elektrische Direktheizgeräte eingesetzt. Mit ihnen ist auf besonders einfache Weise eine getrennte Temperierung einzelner Zonen des Gebäudes möglich, da die Erzeugung der thermischen Energie lokal im Bereich der einzelnen Gebäudezonen erfolgt und da die einzelnen Direktheizgeräte über ihre jeweiligen Steuergeräte getrennt steuerbar sind. So kann für jede Gebäudezone durch eine Programmierung eines der Zone zugeordneten Direktheizgeräts ein gewünschter Temperaturverlauf eingestellt werden, ohne dass die Temperierung der anderen Zonen davon wesentlich beeinflusst wird. Für die Temperierung des Gebäudes kann dabei insgesamt eine vergleichsweise hohe Energieeffizienz erreicht werden. Bei dieser Art von getrennten lokalen Temperaturregelung ergeben sich die zeitlichen Profile für die elektrischen Leistungsaufnahmen der einzelnen Heizgeräte jeweils als direkte Folge aus den lokal vorgegebenen Temperaturverläufen, in Kombination mit den angewendeten Regelungsparametern. Ein Nachteil dieser Temperaturregelung ist jedoch, dass der zeitliche Verlauf der elektrischen Leistungsaufnahme aufgrund der lokalen Regelung meist nicht auf äußere Anreize zur zeitlichen Verschiebung von Leistungsaufnahmen reagiert. Eine solche zeitliche Flexibilität ist jedoch für elektrische Verbraucher generell erstrebenswert. Auch dies wird im Rahmen der Energiewende immer wichtiger, da bei einer steigenden Anzahl von dezentralen Erzeugern für erneuerbare elektrische Energie der Stabilisierung des Stromnetzes und der zeitlichen Anpassung der Verbrauchsprofile an die Verfügbarkeit der (möglichst aus erneuerbaren Energiequellen) bereitgestellten elektrischen Leistung eine immer höhere Bedeutung zukommt.

Aufgabe der Erfindung ist es daher, ein verbessertes Verfahren zum Betrieb eines Temperierungssystems anzugeben, welches diesen Nachteil überwindet. Insbesondere soll ein Betriebsverfahren zur Verfügung gestellt werden, welches eine separate Temperierung einzelner Gebäudezonen erlaubt und gleichzeitig eine zeitliche Flexibilität in der damit zusammenhängenden Leistungsaufnahme ermöglicht. Eine weitere Aufgabe ist es, ein entsprechendes Temperierungssystem für ein Gebäude anzugeben. Diese Aufgaben werden durch das in Anspruch 1 beschriebene Betriebsverfahren und das in Anspruch 15 beschriebene Temperierungssystem gelöst.

Das erfindungsgemäße Verfahren dient zum Betrieb eines Temperierungssystems für ein Gebäude. Das Temperierungssystem umfasst eine Mehrzahl von unabhängig voneinander steuerbaren Temperierungsgeräten.

Das Verfahren umfasst die folgenden Schritte:

a) Bereitstellen eines thermischen Modells des Gebäudes, wobei das Gebäude in dem Modell in eine Mehrzahl von Zonen unterteilt ist, denen jeweils wenigstens ein Temperierungsgerät zugeordnet ist,

wobei das thermische Modell geeignet ist, für die jeweilige Zone in Abhängigkeit von einem zeitabhängigen Betriebsparametersatz des Temperierungssystems ein zeitabhängiges Raumtemperaturprofil vorherzusagen, wobei die zur jeweiligen Zone zugehörigen Gebäudeteile in dem thermischen Modell jeweils durch eine separate thermische Masse mit einer effektiven Wärmekapazität repräsentiert sind,

b) Bereitstellen einer Zielfunktion für ein Optimierungsverfahren, wobei die Zielfunktion wenigstens ein Optimierungskriterium enthält, welches direkt oder indirekt von zeitlichen Verläufen von Leistungsaufnahmen der Temperierungsgeräte abhängt,

c) Extremalisieren der Zielfunktion auf Basis von computergestützt ermittelten Vorhersagewerten auf Grundlage des thermischen Modells, wodurch ein optimierter zeitabhängiger Betriebsparametersatz erhalten wird, sowie

d) Betrieb der Temperierungsgeräte gemäß dem optimierten zeitabhängigen Betriebsparametersatz.

Das Temperierungssystem dient insgesamt dazu, die einzelnen Zonen des Gebäudes entsprechend zonenspezifischer Vorgaben zu temperieren. Dabei können für die jeweilige Zone entweder konstante Temperaturen oder auch zeitlich variable Temperaturverläufe (jeweils innerhalb bestimmter Sollwertgrenzen) vorgegeben werden. Diese vorgegebenen Verläufe werden entsprechend auch als Temperaturbänder bezeichnet. Bei den Temperierungsgeräten kann es sich um Heizgeräte, Kühlgeräte oder kombinierte Heiz- und Kühlgeräte handeln. Da zumindest in den mittleren Breitengraden allgemein das Heizen wichtiger ist als das Kühlen, umfasst das Temperierungssystem vorteilhaft wenigstens ein Heizgerät für die jeweilige Zone. Zur unabhängigen Steuerung kann jedem Temperierungsgerät zumindest ein dediziertes Steuergerät zugeordnet sein. Allgemein soll hier unter dem Begriff "Steuern" auch ein Regeln mit umfasst sein. Die einzelnen Steuergeräte können Bestandteil des jeweils zugeordneten Temperierungsgeräts sein. Vorteilhaft sind es jedenfalls lokale Steuergeräte, welche jeweils genau einem Temperierungsgerät zugeordnet sind und in dessen Bereich angeordnet sind.

Innerhalb des thermischen Modells ist das Gebäude in einzelne, separat temperierbare Zonen unterteilt. Bei diesen Zonen kann es sich insbesondere um einzelne Räume und/oder Gruppen von Räumen handeln. Es ist auch möglich, dass manche Zonen nur Teilbereichen von Räumen entsprechen. Zweckmäßigerweise ist jedoch die Luftzirkulation zwischen den einzelnen Zonen schwächer als innerhalb der Zonen, so dass eine zumindest anteilige thermische Trennung der Zonen vorliegt und eine separate Temperierung gemäß zonenspezifischer Temperaturbänder möglich ist. Den einzelnen Zonen des Modells ist jeweils wenigstens ein Temperierungsgerät zugeordnet. Diese "Zuordnung" ergibt sich daraus, dass das Temperierungsgerät in dem realen Gebäude im Bereich der jeweiligen Zone angeordnet ist und somit geeignet ist, die Raumluft der Zone nach entsprechenden Vorgaben zu temperieren. Bei der genannten "Unterteilung" des Gebäudes in einzeln temperierbare Zonen soll jedoch generell nicht ausgeschlossen sein, dass das Gebäude zusätzlich zu diesen Zonen noch weitere passive Bereiche (z.B. Dach-, Keller- bzw. Abstellräume) aufweist, in denen keine Temperierungsgeräte angeordnet sind. Wesentlich ist nur, dass eine Mehrzahl separat temperierbarer Zonen vorliegt, die in dem Modell einzeln berücksichtigt werden.

Das thermische Modell ist dazu geeignet, den Erfolg der Temperierung für die einzelnen Zonen vorherzusagen. Mit anderen Worten können zeitabhängige Temperaturverläufe für die einzelnen Zonen abhängig von den Betriebsparametern der einzelnen Temperierungsgeräte vorhergesagt werden. Die vorhergesagten Temperaturverläufe können von zahlreichen Parametern abhängen, wie weiter unten beschrieben. Zumindest hängen sie neben den Betriebsparametern der Temperierungssysteme auch von den Wärmekapazitäten der zugehörigen Gebäudeteile der jeweiligen Zonen ab. Diese sind in dem Modell als separate Wärmekapazitäten für jede der betrachteten Zonen repräsentiert. Insbesondere können die Gebäudeteile jeder Zone durch einen einzelnen Effektivwert der zugehörigen Wärmekapazität repräsentiert sein, um den Aufwand der Modellbildung möglichst gering zu halten. Alternativ können auch mehrere Wärmekapazitäten für die jeweilige Zone in dem Modell enthalten sein. Wesentlich ist nur, dass jede Zone mit wenigstens einer Wärmekapazität für die zugehörigen Gebäudeteile in das thermische Modell eingeht. Die zur jeweiligen Zone gehörenden Gebäudeteile bilden eine thermische Masse, durch welche eine thermische Trägheit der jeweiligen Zone bedingt ist. Die Information über diese thermische Trägheit wird im Rahmen der Erfindung dazu genutzt, um mögliche zeitliche Flexibilitäten beim Betrieb der einzelnen Temperierungsgeräte nach Zonen aufgelöst zu bestimmen. Unter dem Begriff "Gebäudeteile" sollen neben den zur Zone gehörenden Wandbereichen, Türen, Fenstern, Boden- und Deckenbereichen auch die übrigen festen Bestandteile verstanden werden (z.B. Möbel, Einbaugeräte, Bücher), welche typischerweise im Tages- und Wochenverlauf nicht wesentlich bewegt werden und einen signifikanten Einfluss auf die thermische Masse der Zone haben.

Die Nutzung der vorhandenen zeitlichen Flexibilitäten erfolgt auf Grundlage einer Optimierung der in Schritt b) bereitgestellten Zielfunktion. Diese Zielfunktion kann ein oder mehrere Optimierungskriterien aufweisen, also mit anderen Worten eine Funktion dieser Kriterien sein. So kann die Zielfunktion mehrere Terme (z.B. Summanden) aufweisen, welche jeweils ein Optimierungskriterium repräsentieren. In den einzelnen Termen können die Optimierungskriterien gegebenenfalls mit Gewichtungsfaktoren gewichtet sein, um eine Priorisierung der jeweiligen Kriterien zu ermöglichen. Wenigstens eines der vorliegenden Optimierungskriterien soll dabei von zeitlichen Verläufen bei den Leistungsaufnahmen der einzelnen Temperierungsgeräte abhängig sein und insbesondere auch durch zeitliche Verschiebungen bei konstanter Gesamt-Leistungsaufnahme beeinflussbar sein. Diese Abhängigkeit kann direkt oder indirekt sein. Mit anderen Worten ist nicht der zeitliche Verlauf an sich das Kriterium, sondern eine Größe, welche sich durch zeitliche Verschiebungen in den Leistungsaufnahmen beeinflussen lässt. Diese Größe kann beispielsweise mit der zeitlichen Stabilisierung eines Stromnetzes zusammenhängen, aus welchem elektrische Leistung für die Temperierungsgeräte bezogen wird. Sie kann auch mit der Anpassung der Leistungsaufnahme an eine zeitliche Verfügbarkeit von erneuerbar erzeugter elektrischer Energie zusammenhängen. Allgemeiner ausgedrückt kann das Optimierungskriterium eine Größe sein, die eine möglichst gute Übereinstimmung der zeitabhängigen Leistungsaufnahme des Energiesystems mit einem zumindest näherungsweise vorliegenden zeitabhängigen Soll-Leistungsprofil abbildet.

Die bereitgestellte Zielfunktion ist insbesondere eine "übergeordnete Zielfunktion" in dem Sinne, dass sie von den Betriebsparametern mehrerer (und insbesondere aller im Gebäude vorhandenen) Temperierungsgeräte abhängt. Durch ihr Extremalisieren in Schritt c) wird entsprechend ein übergeordneter Betriebsparametersatz erhalten, welcher einzelne Teil-Betriebsparametersätze für die jeweiligen Temperierungsgeräte enthält. Dabei sind die Teil-Betriebsparametersätze zeitabhängig und enthalten insbesondere zeitabhängige Verläufe für die Leistungsaufnahmen der einzelnen Temperierungsgeräte. In Schritt d) werden dann die einzelnen Temperierungsgeräte mit den auf diese Weise optimierten zeitabhängigen Teil-Betriebsparametersätzen betrieben.

Der Kerngedanke der vorliegenden Erfindung ist es, die durch die thermischen Trägheiten der einzelnen Zonen bedingten zeitlichen Flexibilitäten auszunutzen, um ein damit zusammenhängendes Optimierungsziel wie z.B. eine Reduzierung von Lastspitzen und/oder eine Erhöhung des Anteils erneuerbar erzeugter elektrischer Leistung zu erreichen. Hierzu wird auf übergeordneter Ebene eine Optimierung einer Zielfunktion durchgeführt, welche von Betriebsparametern mehrerer Temperierungsgeräte abhängt. Mit anderen Worten erfolgt die Optimierung zur Ausnutzung der zeitlichen Flexibilitäten in der Leistungsaufnahme nicht einzeln pro Temperierungsgerät, sondern übergeordnet für das gesamte Gebäude. Das Ergebnis dieser übergeordneten Optimierung kann dann aber an die Steuergeräte der einzelnen Temperierungsgeräte übermittelt und dort in der Gerätesteuerung lokal umgesetzt werden. Durch die getrennte Steuerung der einzelnen Temperierungsgeräte können die einzelnen Zonen des Gebäudes entsprechend ihren lokalen Anforderungen temperiert werden. Die lokalen Anforderungen können in die übergeordnete Optimierung z.B. als Randbedingungen eingehen. Um die lokalen Temperaturprofile der einzelnen Zonen präzise vorhersagen zu können, ist es wichtig, dass in dem thermischen Modell die thermischen Massen der einzelnen Zonen als separate Wärmekapazitäten repräsentiert sind. Bei der Optimierung der Betriebsparameter auf Grundlage des thermischen Modells wird eine Nutzung der vorhandenen zeitlichen Flexibilitäten aufgrund der unterschiedlichen thermischen Trägheiten erreicht. Die Optimierung findet übergeordnet statt und führt zu einem Gesamt-Optimum. Dies hat einerseits den Vorteil, dass die Optimierung in nur einem Schritt und damit ressourceneffizienter erfolgen kann, als wenn für jede Zone eine separate Optimierung durchgeführt würde. Die Optimierung kann beispielsweise in einer zentralen Recheneinheit durchgeführt werden. Außerdem führt die gemeinsame Optimierung aller Betriebsparameter durch Extremalisieren einer übergeordneten Zielfunktion dazu, dass Synergien zwischen den Betriebsparametern der einzelnen Zonen genutzt werden können, da z.B. erwünschte zeitliche Verschiebungen dort umgesetzt werden können, wo innerhalb der vorliegenden Randbedingungen und abhängig von den unterschiedlichen thermischen Trägheiten die größte Flexibilität vorliegt. So kann bei der übergeordneten Optimierung insbesondere ein besserer Trade-Off zwischen einer möglichst hohen Gesamt-Energieeffizienz und einer möglichst guten Ausnutzung der vorhandenen zeitlichen Flexibilitäten gefunden werden.

Das erfindungsgemäße Temperierungssystem dient zur Temperierung eines Gebäudes. Es umfasst eine Mehrzahl von unabhängig voneinander steuerbaren Temperierungsgeräten. Weiterhin umfasst es eine zentrale Steuereinheit, welche zur Ausführung des erfindungsgemäßen Verfahrens ausgelegt ist. Die Vorteile des erfindungsgemäßen Temperierungssystems ergeben sich analog zu den oben beschriebenen Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens auch bei dem Temperierungssystem realisiert werden, und umgekehrt.

So kann das Extremalisieren in Schritt c) allgemein vorteilhaft unter der Randbedingung erfolgen, dass für die jeweilige Zone ein vorgegebenes zeitabhängiges Raumtemperaturprofil, insbesondere innerhalb vorgegebener Grenzen, eingehalten wird. Mit anderen Worten kann für jede der Zonen ein einzuhaltendes Temperaturband vorgegeben sein. So wird erreicht, dass für jede Zone die Nutzerwünsche bezüglich der zeitlichen Temperaturverläufe eingehalten werden. Die erlaubten Bereiche können jedoch vorteilhaft vergleichsweise breit gewählt sein, um dadurch eine stärkere Ausnutzung möglicher zeitlicher Verschiebungen in der Leistungsaufnahme zu ermöglichen. So können insbesondere für Zeiten, in denen die jeweiligen Zonen nicht genutzt werden (z.B. Büroräume außerhalb der üblichen Arbeitszeiten), vergleichsweise große Abweichungen von der üblichen Raumtemperatur erlaubt werden. Zusätzlich zu dieser Randbedingung für das Ziel der Temperierung können optional noch weitere Randbedingungen bei der Extremalisierung berücksichtigt werden, wie z.B. Leistungs-Grenzwerte für den Betrieb der Temperierungsgeräte.

Gemäß einer weiteren allgemein vorteilhaften Ausführungsform kann das Temperierungssystem zu jedem der Temperierungsgeräte ein zugeordnetes Steuergerät umfassen. Weiterhin kann es ein übergeordnetes Steuerungssystem zur Steuerung der einzelnen Steuergeräte umfassen. Der optimierte zeitabhängige Gesamt-Betriebsparametersatz, welcher bei der Extremalisierung ermittelt wird, kann dann insbesondere eine Mehrzahl von zeitabhängigen Teil-Betriebsparametersätzen für die jeweiligen Temperierungsgeräte umfassen. Diese können von dem übergeordneten Steuerungssystem an die zugehörigen Steuergeräte der einzelnen Temperierungsgeräte übermittelt werden. Das übergeordnete Steuerungssystem kann dabei auch eine übergeordnete Recheneinheit aufweisen, in welcher die Ermittlung der optimierten Parameter zentral erfolgt. Die Teil-Betriebsparametersätze umfassen also Sollwerte (Set Points) bzw. zeitliche Sollwerttrajektorien für die einzelnen Temperierungsgeräte. Bei den Größen, die darin festgelegt werden, kann es sich beispielsweise um zeitliche Trajektorien für die Leistungsaufnahme handeln. In diesem Fall ist die Umsetzung der Trajektorien in den einzelnen Steuergeräten vergleichsweise einfach zu realisieren, da dort keine lokale Regelung mehr erfolgen muss. Diese Ausführungsform ist vor allem im Zusammenhang mit elektrischen Direktheizgeräten vorteilhaft, bei denen sich die abgegebene Wärmeleistung im Wesentlichen linear zur elektrischen Leistungsaufnahme verhält. Bei einem hydronischen Heizsystem können die übermittelten Sollwerte für die Einzelgeräte beispielsweise durch (ggf. zeitlich veränderliche) Zieltemperaturen für lokale Heizkörperthermostate gegeben sein.

Allgemein vorteilhaft kann die Zielfunktion ein erstes Optimierungskriterium enthalten, welches eine Energieeffizienz bei der Erreichung von vorgegebenen Raumtemperaturprofilen für die jeweiligen Zonen abbildet. D.h. diese Energieeffizienz kann entweder selbst als Term in der Zielfunktion auftreten, oder es kann ein Term enthalten sein, welcher unmittelbar mit einer solchen Energieeffizienz zusammenhängt. Um das Ziel der Ausnutzung zeitlicher Flexibilitäten zu erreichen, weist die Zielfunktion in diesem Fall zweckmäßig wenigstens ein zusätzliches Optimierungskriterium auf, welches direkt oder indirekt von zeitlichen Verläufen (und damit auch zeitlichen Verschiebungen) von Leistungsaufnahmen der Temperierungsgeräte abhängt. Mit anderen Worten kann durch die Berücksichtigung von wenigstens zwei entkoppelten Optimierungskriterien in der Zielfunktion erreicht werden, dass ein günstiger Trade-Off zwischen einem energieeffizienten Betrieb und einer zusätzlichen Nutzung zeitlicher Flexibilitäten aufgefunden wird. Die Priorisierung dieser unter Umständen miteinander konkurrierenden Ziele kann durch eine entsprechende Gewichtung der einzelnen Optimierungskriterien in der Zielfunktion erreicht werden, also z.B. über Gewichtungsfaktoren oder eine andere Art von Gewichtungsfunktion.

Für das Optimierungskriterium, welches die Ausnutzung der zeitlichen Flexibilität abbildet, kommen unterschiedliche Größen in Frage. So kann dieses Optimierungskriterium allgemein besonders vorteilhaft eine Übereinstimmung der zeitabhängigen Leistungsaufnahme des Energiesystems mit einem vorgegebenen und/oder zumindest näherungsweise bekannten Soll-Leistungsprofil abbilden.

Ein vorgegebenes zeitabhängiges Soll-Leistungsprofil kann z.B. dann vorliegen, wenn die Optimierung durch einen sogenannten Aggregator (Betreiber eines virtuellen Kraftwerks) ausgesteuert wird. Mit anderen Worten kann der Aggregator dann als Optimierungskriterium vorgeben, welches Zeitverhalten der Leistungsaufnahme möglichst beim Betrieb des Temperierungssystems erreicht werden soll. Das entsprechende in der Zielfunktion enthaltene Optimierungskriterium kann dann eine (möglichst zu maximierende) Übereinstimmung zwischen tatsächlicher zeitabhängiger Leistungsaufnahme und diesem vorgegebenen idealen Zeitverhalten sein.

Alternativ zu einem solchen vollständigen Sollverlauf kann das zeitabhängige Soll-Leistungsprofil auch nur näherungsweise und/oder abschnittsweise bekannt sein. So das anzustrebende Soll-Leistungsprofil beispielsweise für bestimmte Zeitabschnitte berechnet und/oder geschätzt werden. Es ist auch möglich, dass diese Information in Form von Angaben über Optimierungsrichtungen zu bestimmten Zeitabschnitten vorliegt. Beispielsweise kann die Vorgabe beinhalten, dass die Leistungsaufnahme in einem bestimmten Zeitabschnitt möglichst hoch sein soll und/oder in einem anderen Zeitabschnitt möglichst niedrig sein soll. Oder es können wiederum sogenannte Soll-Leistungsbänder angegeben werden, also zeitabhängige Leistungsbereiche (mit oberen und unteren Grenzwertverläufen), in denen sich die Leistungsaufnahme bewegen soll. Gemäß einer weiteren Alternative kann die Information über das zu erreichende Leistungsprofil allgemein auch über eine Incentivierung bereitgestellt werden. Dies kann insbesondere eine finanzielle Incentivierung sein, über welche ein Anreiz für eine besonders niedrige Leistungsaufnahme (z.B. über einen hohen Bezugspreis für bereitgestellte elektrische Energie) oder für eine besonders hohe Leistungsaufnahme (z.B. durch einen entsprechend niedrigen Bezugspreis) in einem bestimmten Zeitabschnitt geschaffen wird. Daher kann das mit der Ausnutzung der zeitlichen Flexibilität zusammenhängende Optimierungskriterium auch eine finanzielle Größe beinhalten und/oder von einer finanziellen Größe abhängen. Eine solche finanzielle Incentivierung z.B. in Form von zeitabhängigen Börsenpreisen kann insbesondere durch die daraus resultierende Nutzung vorhandener zeitlicher Flexibilitäten beim Betrieb des Temperierungssystems zu einer Stabilisierung eines Stromnetzes und/oder zu einer Erhöhung des Anteils erneuerbar erzeugter elektrischer Energie und damit zu einer Verringerung klimaschädlicher Emissionen beitragen. Unter "Erzeugung" wird hier allgemein eine Umwandlung einer Energieform in eine andere Energieform verstanden.

Dementsprechend kann das Gebäude an ein öffentliches Stromnetz angeschlossen sein, und das Optimierungskriterium kann die Bereitstellung von sog. Systemdienstleistungen (Ancillary Services) für das Stromnetz darstellen oder beinhalten. Zu solchen Systemdienstleistungen gehört beispielsweise ein Beitrag zur Netzfrequenzhaltung und/oder zur Spannungshaltung. Ein solcher Beitrag kann durch eine gezielte Leistungsaufnahme gemäß einer zeitlichen Vorgabe erreicht werden, also beispielsweise durch eine kurzfristige Senkung in der Leistungsaufnahme, um einen anderweitigen Verbrauchspeak auszugleichen, bzw. durch eine kurzfristige Steigerung der Leistungsaufnahme, um einen Versorgungspeak auszugleichen (oder jeweils umgekehrt).

Gemäß einer weiteren vorteilhaften Ausführung kann das Gebäude ebenfalls an ein öffentliches Stromnetz angeschlossen sein, und das Optimierungskriterium kann einen Kaufpreis für den Zukauf benötigter elektrischer Energie für den Betrieb des Temperierungssystems umfassen. Insbesondere kann der Gesamtpreis für den Zukauf benötigter Energie minimiert werden. Wenn der Preis für gehandelte elektrische Energiemengen an einer Strombörse zeitlich variiert (z.B. je nach zeitlichen Verlauf von Sonneneinstrahlung und/oder Wind), so kann dies eine Incentivierung für eine Maximierung des Anteils an erneuerbar erzeugter elektrischer Energie am gesamten Energieverbrauch innerhalb des Stromnetzes sein (Strommix). Mit anderen Worten kann bei dieser Ausführungsform das Optimierungskriterium auch eine Reduzierung von klimaschädlichen Emissionen beim Betrieb des Stromnetzes als Ganzes abbilden bzw. beinhalten.

In analoger Weise kann bei einer weiteren vorteilhaften Ausführungsform das Gebäude mit einem lokalen Erzeuger für elektrische Energie verbunden sein. So kann das Gebäude beispielsweise eine Photovoltaikanlage und/oder eine Windkraftanlage umfassen bzw. mit einer solchen Anlage verbunden sein. Das Optimierungskriterium kann dann bei einer ersten Variante dieser Ausführungsform einen Eigenverbrauch von lokal erzeugter elektrischer Energie umfassen. Dieser Eigenverbrauch kann insbesondere maximiert werden. Alternativ oder zusätzlich kann das Optimierungskriterium einen Preis für den Verkauf von lokal erzeugter elektrischer Energie umfassen bzw. mit einem solchen Preis zusammenhängen. Auch durch Anbieten und entsprechendes Handeln der lokal erzeugten erneuerbaren Energie kann eine Minimierung der Treibhausgasemissionen beim Betrieb des gesamten Stromnetzes erreicht werden. Ein zeitlich variierender Preis kann wiederum eine geeignete Incentivierung für Maßnahmen sein, die dies erreichen. Die Ausnutzung vorhandener zeitlicher Flexibilitäten beim Betrieb eines Temperierungssystems stellen eine solche Maßnahme dar.

Gemäß einer allgemein vorteilhaften Ausführungsform kann innerhalb des thermischen Modells eine Ausgeglichenheit der thermischen Energiebilanz für die thermische Masse der jeweiligen Zone zugrunde gelegt sein. Mit anderen Worten kann eine solche Ausgeglichenheit als Randbedingung formuliert sein, welche bei dem Extremalisieren in Schritt c) berücksichtigt wird. Die Ausgeglichenheit der thermischen Energiebilanz gibt wieder, dass bei der Übertragung und/oder Speicherung thermischer Energie insgesamt das Gesetz der Energieerhaltung gilt und dass daher die Änderung des thermischen Energiegehalts der thermischen Masse gleich der Differenz aus in diese thermische Masse eingebrachter und von ihr abgegebener thermischer Energie ist (also der Differenz aus Wärmeeintrag und Wärmeabgabe). Eine solche Energiebilanz wird vorteilhaft für eine Mehrzahl thermischer Zonen des Modells und insbesondere für jede separat temperierbare Zone innerhalb des Gebäudes aufgestellt, so dass sich eine entsprechende Anzahl von solchen Randbedingungen ergibt. Aus einer solchen Energiebilanz ergibt sich bei einer zeitlich diskretisierten Betrachtung durch Division durch die Länge des betrachteten Zeitschritts eine entsprechende Leistungsbilanz. Allgemein können solche Bedingungen entweder in Abhängigkeit von Energiewerten oder Leistungswerten formuliert werden, so dass die Beschreibungen von thermischer Energie und thermischer Leistung in diesem Sinne als einander äquivalent zu betrachten sind.

In der thermischen Energiebilanz können insbesondere für die thermische Masse der jeweiligen Zone die folgenden Beiträge berücksichtigt sein:

- Wärmeübertragungen zu den entsprechenden thermischen Massen benachbarter Zonen,
- eine Wärmeübertragung durch Wärmeleitung zur Umgebung des Gebäudes,
- eine Wärmeübertragung zur Innenluft der jeweiligen Zone,
- ein anteiliger Wärmeeintrag durch das wenigstens eine zugeordnete Temperierungsgerät,
- ein anteiliger Wärmeeintrag durch Wärmestrahlung von außen,
- ein anteiliger Wärmeeintrag durch weitere Wärmequellen innerhalb der jeweiligen Zone sowie
- eine Änderung der in der der thermischen Masse enthaltenen thermischen Energie.

Die in Form einer Leistungsbilanz formulierte Randbedingung kann somit für eine gegebene Zone mit der zugehörigen effektiven Wärmekapazität $C_m$ der thermischen Masse wie folgt lauten:

$$\sum_z \left[ H_{tr,z} \cdot (\theta_m - \theta_z) \right] + H_{ma} \cdot (\theta_a - \theta_m)$$

$$= \xi_{m,h} \cdot \dot{Q}_{heat} + \xi_{m,sol} \cdot \dot{Q}_{sol} + \xi_{m,int} \cdot \dot{Q}_{int} - C_m \cdot \frac{\partial \theta_m}{\partial t} \qquad (1)$$

Dabei läuft der Index z über ausgewählte, zu der jeweils betrachteten Zone benachbarte Zonen. Dies können z.B. bestimmte zu der jeweils betrachteten Zone im Gebäude direkt räumlich benachbarten Zonen sein, wie z.B. Nachbarräume in derselben Etage und/oder unmittelbar unterhalb bzw. oberhalb angeordnete Räume in benachbarten Etagen. Der Term $\Sigma_z[H_{tr,z} \cdot (\theta_m - \theta_z)]$ bildet entsprechend die Wärmeübertragungen zu den entsprechenden thermischen Massen benachbarter Zonen ab. Dabei ist $\theta_m$ die Temperatur der jeweils betrachteten Zone, und $\theta_z$ ist die Temperatur einer benachbarten Zone *z*. $H_{tr,z}$ ist der zugehörige Wärmeübertragungskoeffizient. In dieser Summation kann auch die entsprechende Wärmeübertragung an die Außenluft in der Umgebung des Gebäudes erfasst sein. In diesem Fall erfasst der Index *z* bei der Summation auch die Umgebung des Gebäudes als eigene Zone (auch wenn diese nicht Teil des Gebäudes ist). In ähnlicher Weise stellt *a* die Temperatur der Innenluft der jeweils betrachteten Zone dar, und $H_{ma}$ steht für den Wärmeübertragungskoeffizienten für die Wärmeübertragung zwischen der thermischen Masse der jeweiligen Zone zu ihrer Innenluft. $\dot{Q}_{heat}$ steht für die Wärmeleistung der zur jeweils betrachteten Zone zugeordneten Temperierungs-geräte. $\xi_{m,h}$ gibt den relativen Anteil an, welcher von der insgesamt freigesetzten Wärmeleistung in die thermische Masse dieser Zone eingebracht wird. In entsprechender Weise steht $\dot{Q}_{sol}$ für die Wärmeleistung der von außen auf das Gebäude auftreffenden Wärmestrahlung (insbesondere durch Sonneneinstrahlung), und $\xi_{m,sol}$ steht für den relativen Anteil, der hiervon in die thermische Masse eingebracht wird. $\dot{Q}_{int}$ steht entsprechend für die Wärmeleistung weiterer Wärmequellen innerhalb der jeweiligen Zone, und $\xi_{m,int}$ steht für den dazu gehörigen Relativanteil, der in die betrachtete thermische Masse eingebracht wird. Diese zusätzlichen Wärmequellen sind beispielsweise im Raum befindliche Personen sowie weitere Verbraucher wie z.B. elektrische Betriebsmittel. $C_m \cdot \frac{\partial \theta_m}{\partial t}$ steht für die Änderung der in der thermischen Masse enthaltenen thermischen Energie (hier als Leistungsänderung ausgedrückt). Die partielle Ableitung der entsprechenden Temperatur $\theta_m$ dieser thermischen Masse nach der Zeit $t$ kann in dem Modell vorteilhaft durch eine diskretisierte Betrachtung, also durch eine Zerlegung in einzelne Zeitschritte, abgebildet werden. In der oben formulierten Energie- bzw. Leistungsbilanz hängt das Vorzeichen der einzelnen Terme von der Übertragungsrichtung ab. Wärmeeinträge in die thermische Masse und Wärmeabgaben von ihr gehen also mit umgekehrtem Vorzeichen in die Bilanz ein. So kann der Wärmeeintrag $\xi_{m,h} \cdot \dot{Q}_{heat}$ durch das zugehörige Temperierungsgerät z.B. positiv oder negativ sein, je nachdem ob dieses Gerät als Heizgerät oder als Kühlgerät betrieben wird.

Gemäß einer weiteren allgemein vorteilhaften Ausführungsform kann innerhalb des thermischen Modells eine Ausgeglichenheit der thermischen Energiebilanz für die Innenluft der jeweiligen Zone zugrunde gelegt sein. Mit anderen Worten kann eine solche Ausgeglichenheit als (insbesondere weitere) Randbedingung formuliert sein, welche bei dem Extremalisieren in Schritt c) berücksichtigt wird. Auch hier gibt die Ausgeglichenheit der thermischen Energiebilanz das Gesetz der Energieerhaltung wieder. Daher wird die Änderung des thermischen Energiegehalts der Innenluft der jeweiligen Zone gleich der Differenz aus in die Innenluft eingebrachter und von ihr abgegebener thermischer Energie gesetzt. Auch diese Energiebilanz wird vorteilhaft für eine Mehrzahl thermischer Zonen des Modells aufgestellt und insbesondere für jede thermische Zone innerhalb des Gebäudes, so dass sich eine entsprechende Anzahl von solchen Randbedingungen ergibt. Im Unterschied zur oben beschriebenen Energiebilanz der zugehörigen thermischen Masse kann bei der Betrachtung der Energiebilanz der Innenluft die Wärmekapazität der Luft typischerweise vernachlässigt werden. Somit kann die entsprechende Bilanz als Gleichsetzung von Wärmeeintrag und Wärmeabgabe (bezogen auf die Innenluft) formuliert werden. Die in Form einer Leistungsbilanz formulierte Randbedingung kann somit für die Innenluft einer gegebenen Zone wie folgt lauten:

$$H_{ve} \cdot (\theta_a - \theta_e) - H_{ma} \cdot (\theta_a - \theta_m) = \xi_{a,h} \cdot \dot{Q}_{heat} + \xi_{a,sol} \cdot \dot{Q}_{sol} + \xi_{a,int} \cdot \dot{Q}_{int} \qquad (2)$$

Dabei ist $\theta_e$ die Temperatur der Umgebungsluft außerhalb des Gebäudes (Außenluft), und $H_{ve}$ ist der entsprechende Koeffizient für die Wärmeübertragung zwischen der Innenluft und der Außenluft, welche insbesondere durch Luftaustausch (Lüftung) stattfindet. $\xi_{a,h}$, $\xi_{a,sol}$ und $\xi_{a,int}$ geben wiederum die relativen Anteile an, die von den entsprechenden Wärmeleistungen $\dot{Q}_{heat}$, $\dot{Q}_{sol}$ und $\dot{Q}_{int}$ in die Innenluft der jeweils betrachteten Zone eingebracht werden. Durch die hier vorgenommene Vernachlässigung der Wärmekapazität der Innenluft kann der entsprechende Satz von Randbedingungen noch einfacher gehandhabt werden als der oben beschriebene erste Satz von Randbedingungen für die thermische Masse. Es soll jedoch nicht ausgeschlossen sein, dass bei den Energie- bzw. Leistungsbilanzen für die Innenluft auch deren Wärmekapazität (und damit die Änderung der darin enthaltenen thermischen Energie) als Term berücksichtigt wird.

Das Bereitstellen des thermischen Modells in Schritt a) kann insbesondere die Vorgabe von Werten für ein oder mehrere der folgenden Größen für die jeweils betrachtete Zone beinhalten:

- Koeffizienten ($H_{tr,z}$) für die Wärmeübertragung zwischen der thermischen Masse der jeweiligen Zone und den entsprechenden thermischen Massen benachbarter Zonen und/oder der Außenluft,
- einen Koeffizienten ($H_{ma}$) für die Wärmeübertragung von der thermischen Masse der jeweiligen Zone zur Innenluft der jeweiligen Zone,
- einen relativen Anteil ($\xi_{m,h}$) für den Wärmeeintrag durch das wenigstens eine zugehörige Temperierungsgerät in die thermische Masse der jeweiligen Zone,
- einen relativen Anteil ($\xi_{m,sol}$) für den Wärmeeintrag durch Wärmestrahlung von außen in die thermische Masse der jeweiligen Zone,
- einen relativen Anteil ($\xi_{m,int}$) für den Wärmeeintrag durch weitere Wärmequellen innerhalb der jeweiligen Zone in die thermische Masse der jeweiligen Zone,
- eine effektive Wärmekapazität ($C_m$) für die thermische Masse der jeweiligen Zone,
- einen Koeffizienten ($H_{ve}$) für eine Wärmeübertragung an die Außenluft durch Luftaustausch,
- einen relativen Anteil ($\xi_{a,h}$) für den Wärmeeintrag durch das wenigstens eine zugehörige Temperierungsgerät in die Innenluft der jeweiligen Zone,
- einen relativen Anteil ($\xi_{a,sol}$) für den Wärmeeintrag durch Wärmestrahlung von außen in die Innenluft der jeweiligen Zone sowie
- einen relativen Anteil ($\xi_{a,int}$) für den Wärmeeintrag durch weitere Wärmequellen innerhalb der jeweiligen Zone in die Innenluft der jeweiligen Zone.

Insgesamt können die entsprechenden Werte dann für eine Mehrzahl von separat temperierbaren Zonen und insbesondere für jede dieser Zonen vorgegeben werden. Generell können sie als Teilschritt von Schritt a) ermittelt werden oder auch in einem zusätzlichen Schritt des erfindungsgemäßen Verfahrens. Bei den oben aufgelisteten Größen handelt es sich um Koeffizienten und relative Anteile, also bei Größen, welche beim Betrieb des Temperierungssystems zumindest über bestimmte Zeiträume hinweg konstant bleiben können oder zwischen bestimmten diskreten Werten wechseln können. Daher können diese Größen bzw. die möglichen diskreten Werte dieser Größen in einem Initialisierungsschritt einmal ermittelt werden und diese Werte können im laufenden Betrieb fix gehalten werden. Ein Beispiel für eine Größe, die nicht konstant ist, sondern zwischen diskreten Werten wechselt, ist der Koeffizient für eine Wärmeübertragung durch Luftaustausch zwischen Innenluft einer Zone und der Außenluft. Dieser Koeffizient kann beim einfachen Fall eines Raums mit einem Fenster z.B. zwischen zwei Grenzwerten wechseln, je nachdem ob das Fenster ganz offen oder ganz geschlossen ist. Zwischenwerte sind natürlich bei einer Teilöffnung generell auch möglich, und bei Zonen mit mehreren Fenstern und/oder Außentüren können verschiedene Kombinationen auftreten. Die Öffnungszustände, aus sich denen die entsprechenden Werte des Koeffizienten, sind jedoch über entsprechende Fenster- und Türsensoren grundsätzlich einfach zu ermitteln. In analoger Weise gilt eine solche Zuordnung zwischen dem Zustand des Gebäudes und dem Wert eines Koeffizienten oder Relativanteils auch für die anderen genannten Größen. Es kommen dann ggf. nur andere Sensoren für die Ermittlung des relevanten Gebäudezustands zum Einsatz.

Das Temperierungssystem kann also allgemein eine Vielzahl von Sensoren aufweisen, und die Ermittlung der oben genannten Werte kann auf Basis von Messwerten dieser Sensoren erfolgen. Diese Sensoren können insbesondere jeweils ein oder mehrere Zustandssensoren für Türen und/oder Fenster (auch für innenliegende Türen), Präsenzmelder für die Bestimmung der in den Zonen anwesenden Personen, Sensoren für den Gerätezustand der enthaltenen Betriebsmittel, Sensoren zur Messung der Sonneneinstrahlung sowie Sensoren zur Messung der Temperatur von Innenluft bzw. Außenluft umfassen.

Allgemein kann die Bestimmung der genannten Größen z.B. durch eine Initialisierungsroutine zu Beginn des Betriebs des Temperierungssystems erfolgen. Vor allem die möglichen Werte der Koeffizienten und/oder der Relativanteile können dann zumindest über bestimmte Zeiträume des Betriebs konstant gehalten werden. Alternativ ist aber auch eine kontinuierliche oder zumindest gelegentliche Anpassung an die jeweils gemessenen Sensorwerte möglich. Auf diese Weise können auch mittelfristige Veränderungen in den thermischen Randbedingungen, wie sie z.B. durch das Verschieben von Möbeln verursacht werden, in dem thermischen Modell erfasst werden. Die Ermittlung der genannten Werte kann beispielsweise durch einen vorgegebenen Algorithmus oder auch durch ein Verfahren der künstlichen Intelligenz erfolgen (also z.B. mit einem künstlichen neuronalen Netzwerk, das durch maschinelles Lernen trainiert wird).

Neben den oben aufgelisteten Koeffizienten und Relativanteilen können bei der Bestimmung der Werte der Zielfunktion auch andere Größen eine Rolle spielen, deren Werte zeitlich stärker schwanken, oder deren Werte weniger gut vorhersehbar sind. Eine solche "flexible Größe" ist z.B. die Sonneneinstrahlung, die aber auch gut über entsprechende Sensor-Messwerte erfasst werden kann. Andere relevante zeitabhängige Größen sind die oben beschriebenen Soll-Temperaturbänder für die einzelnen Zonen, die gegebenenfalls von den nutzenden Personen des Gebäudes auch kurzfristig dynamisch geändert werden können und die oben beschriebenen zeitabhängigen Soll-Leistungsvorgaben sowie ggf. Preise für den Kauf oder Verkauf von elektrischer Energie. Für all diese Werte können zeitabhängige Eingabegrößen an das Modell übermittelt werden, die dann bei dem Extremalisieren berücksichtigt werden. Gegebenenfalls sich auch kurzfristige Aktualisierungen dieser flexiblen Größen in dem Modell möglich.

Allgemein vorteilhaft kann innerhalb des thermischen Modells bei der Modellierung der Zeitabhängigkeit der vorhergesagten Größen eine zeitliche Diskretisierung vorgenommen werden. Mit anderen Worten kann die Ermittlung der Vorhersagewerte auf einer zeitlichen Diskretisierung des Zeitverhaltens der Wärmeübertragungen und/oder der thermischen Energieinhalte beruhen. Dies ist besonders zweckmäßig für die Modellierung der partiellen Ableitung $\frac{\partial \theta_m}{\partial t}$, welche in dem Term für die Änderung der in der thermischen Masse enthaltenen thermischen Energie auftritt. Da die übrigen Terme nur einfache, lineare Abhängigkeiten beschreiben, ist die Modellierung und somit auch das Extremalisieren der darauf basierenden Zielfunktion vom Rechenaufwand her vergleichsweise einfach zu handhaben.

Gemäß einer allgemein vorteilhaften Ausführungsform kann zumindest eine Teilmenge der im Gebäude vorliegenden Temperierungsgeräte durch elektrische Temperierungsgeräte gegeben sein, also insbesondere durch elektrische Heiz-, Kühl- oder kombinierte Heiz- und Kühlgeräte. Allgemein soll dabei unter einem elektrischen Temperierungsgerät ein Gerät verstanden werden, dessen wesentliche Energiequelle für die Temperierung eine elektrische Energie ist. Die aufgewendete Heiz- oder Kühlenergie soll also zumindest überwiegend aus elektrischer Energie stammen. Dies steht im Gegensatz zu Temperierungssystemen auf Basis von Brennstoffen, bei denen elektrische Energie nur zum Betrieb von elektrischen Steuereinheiten eingesetzt wird. Besonders vorteilhaft können sogar alle vorhandenen Temperierungsgeräte als elektrische Temperierungsgeräte ausgestaltet sein. Allgemein ist der Einsatz von elektrischen Temperierungsgeräten im Rahmen der Erfindung besonders vorteilhaft, weil durch sie ein vergleichsweise hoher elektrischer Energiebedarf entsteht, so dass die Ausnutzung vorhandener zeitlicher Flexibilitäten insgesamt einen großen Hebel darstellt.

Besonders bevorzugt ist es, wenn zumindest eine Teilmenge der Temperierungsgeräte durch elektrische Direktheizgeräte und/oder elektrische Direktkühlgeräte gegeben ist. Dies sind Temperierungsgeräte, bei denen die Umwandlung von elektrischer Energie in thermische Energie lokal im Bereich des jeweiligen Heizgeräts erfolgt. Dies steht im Gegensatz zum Betrieb von zentralen Wärmepumpen, bei denen zwar auch die elektrische Energie der wesentliche (zumindest vom Betreiber einzusetzende) Energieträger ist, bei denen die Übertragung an die lokalen Temperierungsgeräte der einzelnen Zonen aber durch einen Wasserkreislauf erfolgt. Ein besonderer Vorteil von elektrischen Direkt-Temperierungsgeräten ist, dass die in die Zone eingebrachte bzw. ihr entzogene Wärmemenge im Wesentlichen proportional zur umgesetzten elektrischen Energiemenge ist. Somit besteht hier ein im Wesentlichen linearer Zusammenhang, was die Beschreibung der zeitlichen Entwicklungen durch das thermische Modell und die darauf aufbauende Extremalisierung der Zielfunktion unter der Randbedingung bestehender Temperaturvorgaben wesentlich erleichtert. Prinzipiell kommen die Vorteile der Erfindung aber auch bei einem hydronischen Temperierungssystem zum Tragen, z.B. auf Basis einer zentralen Wärmepumpe oder einer anderen elektrisch betriebenen zentralen Wärme- oder Kältequelle. Hier können regelbare Thermostate für die separate Temperierung der einzelnen Zonen vorliegen, deren Ansteuerung auf Basis der erfindungsgemäßen Betriebsparametersätze erfolgt.

Nachfolgend wird die Erfindung anhand einiger bevorzugter Ausführungsbeispiele unter Bezugnahme auf die angehängten Zeichnungen beschrieben, in denen:

Figur 1    eine schematische Darstellung eines Gebäudes zeigt,
Figur 2    eine schematische Darstellung der in dem thermischen Modell beschriebenen Wärmeübertragungswege zeigt,
Figur 3    ein schematisches Ablaufdiagramm eines Betriebsverfahrens zeigt und
Figur 4    eine erweiterte Darstellung eines Gebäudes zeigt.

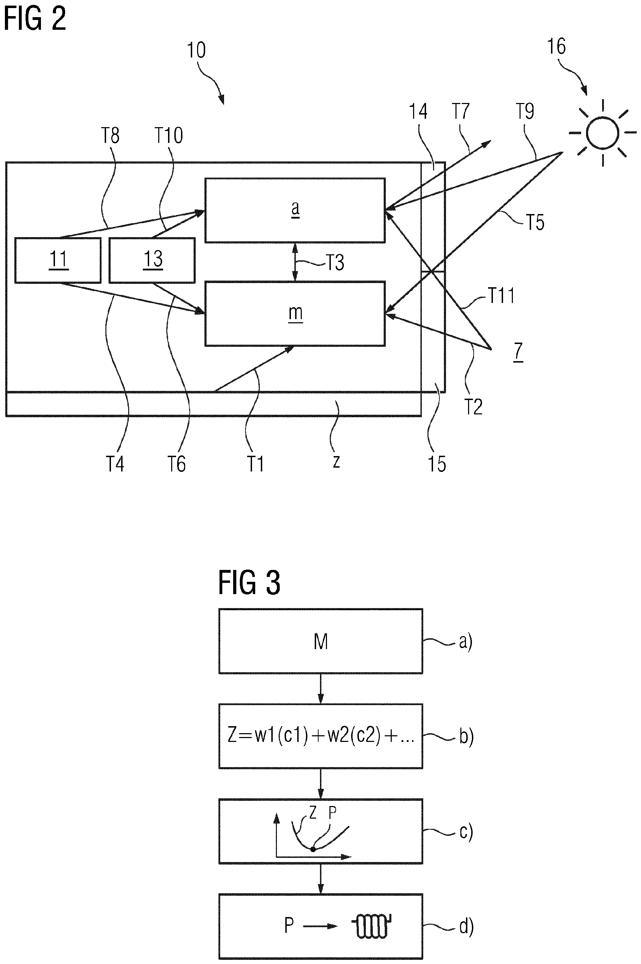

In den Figuren sind gleiche oder funktionsgleiche Elemente mit gleichen Bezugszeichen versehen.

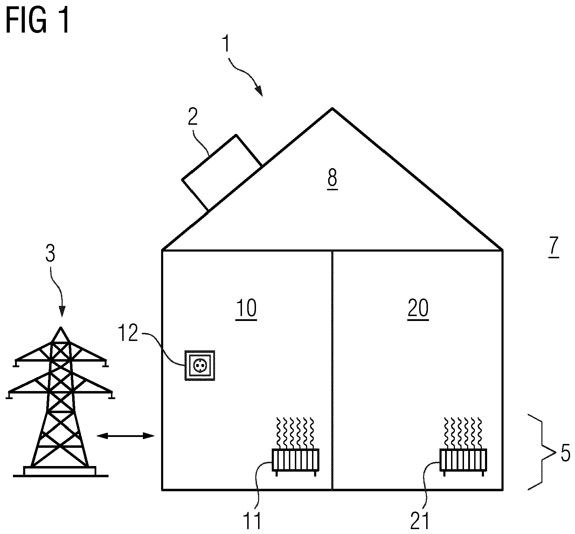

In Figur 1 ist eine schematische Übersichtsskizze eines Gebäudes 1 mit einem Temperierungssystem 5 gezeigt. Das Gebäude 1 weist einen lokalen Erzeuger für elektrische Energie auf, in diesem Beispiel eine Photovoltaikanlage 2. Außerdem ist es mit dem öffentlichen Stromnetz 3 verbunden. Es steht also elektrische Energie aus unterschiedlichen Quellen zur Verfügung, um elektrische Betriebsmittel des Gebäudes 1 versorgen zu können. Das Gebäude 1 weist in diesem Beispiel zwei separat temperierbare Zonen 10 und 20 auf, welche einzelnen Räumen oder auch Raumgruppen bzw. abgetrennten Raumbereichen entsprechen können. Der ersten Zone 10 ist ein eigenes Temperierungsgerät 11 zugeordnet, und der zweiten Zone 20 ist ebenfalls ein eigenes Temperierungsgerät 21 zugeordnet. Im gezeigten Beispiel handelt es sich um Heizgeräte. Nur beispielhaft ist für die erste Zone durch das Steckdosensymbol noch das Vorliegen von optionalen weiteren elektrischen Betriebsmitteln 12 angedeutet. Zusätzlich zu diesen separat temperierbaren Zonen kann das Gebäude 1 noch ein oder mehrere passive Bereiche 8 aufweisen, wie hier durch den Dachstuhl symbolisiert. Ein solcher passiver Bereich 8 weist kein zugeordnetes Temperierungsgerät auf. Daher stellt sich seine Innentemperatur in Abhängigkeit von der Temperatur der Umgebung 7 und der benachbarten temperierbaren Zonen 10 und 20 ein.
Im Rahmen der vorliegenden Erfindung werden Betriebsparameter für ein solches oder ähnliches Temperierungssystem 5 auf der Grundlage eines thermischen Modells ermittelt. Figur 2 zeigt eine schematische Darstellung von relevanten Wärmeübertragungswegen T1 bis T11, welche in einem solchen thermischen Modell berücksichtigt werden können. Zur Vereinfachung des Modells können aber auch manche der gezeigten Wärmeübertragungswege vernachlässigt werden oder es können optional noch weitere berücksichtigt werden. Figur 2 zeigt mögliche Wärmeübertragungswege für eine ausgewählte separat temperierbare Zone 10. Für diese Zone 10 werden die thermische Masse m der zugehörigen Gebäudeteile und die Innenluft a (Raumluft) der Zone als separate Bestandteile modelliert, jeweils mit zugehörigen Temperaturen $\theta_m$ bzw. $\theta_a$. Diese Temperaturen $\theta_m$ bzw. $\theta_a$ werden jeweils mit ihrem Zeitverlauf modelliert. Zusätzlich können sie optional auch ortsaufgelöst betrachtet werden. Ausreichend ist aber im Rahmen der vorliegenden Erfindung die Modellierung eines effektiven Temperaturwerts für $\theta_m$ bzw. $\theta_a$ pro betrachtetem Zeitschritt. Schematisch ist hier nur eine benachbarte Zone z neben der Zone 10 gezeigt, und T1 ist die Wärmeübertragung zwischen der betrachteten Zone 10 und dieser Nachbarzone z. In dem Modell werden zweckmäßigerweise die entsprechenden Wärmeübertragungen T1 zu allen unmittelbar benachbarten Zonen betrachtet, was sich in der Summe im ersten Term der Gleichung (1) widerspiegelt. T2 bezeichnet die Wärmeübertragung durch Wärmeleitung zur Umgebung 7 des Gebäudes, und zwar vor allem durch die Außenwand 15 der Zone 10, aber auch durch vorhandene Fenster 14 und Außentüren im geschlossenen Zustand. T3 bezeichnet die Wärmeübertragung zwischen der thermischen Masse m und der Innenluft a der betrachteten Zone 10. T4 bezeichnet den anteiligen Wärmeeintrag durch ein oder mehrere Temperierungsgeräte 11 der betrachteten Zone 10. T5 bezeichnet den anteiligen Wärmeeintrag durch Wärmestrahlung von einer außenliegenden Strahlungsquelle 16, insbesondere durch Sonneneinstrahlung. T6 bezeichnet den anteiligen Wärmeeintrag durch weitere Wärmequellen 13 innerhalb der betrachteten Zone 10, also z.B. durch Personen und weitere elektrische Betriebsmittel. Diese Wärmeübertragungswege T1 bis T6, welche die thermische Masse m unmittelbar betreffen, treten als Summanden in der Leistungsbilanz von Gleichung (1) auf, zusammen mit der Änderung der thermischen Energie innerhalb der thermischen Masse m. Eine solche Gleichung (1) kann insbesondere innerhalb des Modells für jede separat temperierbare Zone aufgestellt werden und gegebenenfalls auch in modifizierter Form (ohne den Beitrag T4) für optional vorliegende passive Bereiche.

Außerdem können in dem Modell die Wärmeübertragungen zu bzw. von der Innenluft a berücksichtigt werden. So bezeichnet T7 die Wärmeübertragung von der Innenluft a an die Außenluft der Umgebung 7 durch Luftaustausch, also z.B. bei geöffneten Fenstern und/oder Türen bzw. durch den Betrieb einer automatischen Lüftungsanlage. T3 wurde bereits beschrieben. T8 bezeichnet den Wärmeeintrag durch das zugeordnete Temperierungsgerät 11 in die Innenluft a. T9 bezeichnet den Wärmeeintrag durch Wärmestrahlung in die Innenluft a. T10 bezeichnet den Wärmeeintrag durch weitere interne Wärmequellen 12. T11 bezeichnet die Wärmeübertragung durch (direkte) Wärmeleitung zur Umgebung 7. Dieser letzte Beitrag kann typischerweise vernachlässigt werden. Dies äußert sich z.B. darin, dass nur die Übertragungswege T7, T3, T8, T9 und T10 als entsprechende Summanden in Gleichung (2) repräsentiert sind.

Figur 3 zeigt ein schematisches Ablaufdiagramm für ein Betriebsverfahren eines Temperierungssystems nach einem Ausführungsbeispiel der Erfindung. So wird in Schritt a) ein thermisches Modell M bereitgestellt. In diesem thermischen Modell M sind insbesondere die jeweiligen separat temperierbaren Zonen 10, 20 jeweils durch zugeordnete thermische Massen mit entsprechenden effektiven Wärmekapazitäten repräsentiert. Außerdem beschreibt das Modell insbesondere wenigstens einen Teil der in Figur 2 darstellten Wärmeübertragungswege T1 bis T11 von/zu der thermischen Masse m und von/zu der Innenluft a der jeweiligen Zone. Somit ist das thermische Modell geeignet, ein zeitabhängiges Raumtemperaturprofil (also ein Zeitverhalten für $\theta_a$) vorherzusagen.

In Schritt b) wird eine Zielfunktion Z bereitgestellt, auf deren Grundlage eine Optimierung der Betriebsparameter des Temperierungssystems durchgeführt werden kann. Diese Zielfunktion kann mehrere Zielterme aufweisen, in denen mehrere Optimierungskriterien c1, c2, ... enthalten sind. Diese Optimierungskriterien c1, c2, ... können in den einzelnen Zieltermen mit zugeordneten Gewichtungsfunktionen w1, w2 gewichtet sein, beispielsweise durch Multiplikation mit zugeordneten Gewichtungsfaktoren. Das erste Optimierungskriterium kann beispielsweise eine Energieeffizienz bei der Erreichung von vorgegebenen Raumtemperaturprofilen sein bzw. eine solche Energieeffizienz beinhalten und/oder abbilden. Das zweite Optimierungskriterium kann von diesem Energieeffizienz-Term unabhängig sein (also eine separate Dimension darstellen) und eine Ausnutzung einer zeitlichen Flexibilität beim Betrieb des Temperierungssystems abbilden. Mit anderen Worten kann es direkt oder indirekt von zeitlichen Verschiebungen von Leistungsaufnahmen der Temperierungsgeräte abhängig sein. Dabei kann das zweite Optimierungskriterium auch auf Verschiebungen bei konstanter Gesamt-Energieaufnahme reagieren. Das heißt, der Wert für das zusätzliche Optimierungskriterium ändern sich auch dann, wenn Leistungsaufnahmen nur zeitlich verschoben werden, ohne dass sich von den Temperierungsgeräten aufgenommene Gesamtenergie ändert. Dieses zusätzliche Optimierungskriterium kann beispielsweise eine Bereitstellung von Systemdienstleistungen für das Stromnetz abbilden, also z.B. einen Beitrag zur zeitlichen Stabilisierung von Netzfrequenz und/oder Netzspannung im Stromnetz. Alternativ oder zusätzlich kann das weitere Optimierungskriterium eine Erhöhung des Anteils von im Bereich des Gebäudes lokal erzeugter erneuerbarer elektrischer Energie sein. Gemäß einer weiteren Ausführungsform kann das Optimierungskriterium ein finanzielles Kriterium sein, also die Minimierung eines Einkaufpreises für elektrische Energie und/oder die Maximierung eines Verkaufspreises für elektrische Energie abbilden. Durch zeitlich variierende Börsenpreise können nämlich Anreize für die Erhöhung des Anteils erneuerbar erzeugter Energie im gesamten Stromnetz gesetzt werden. Entsprechend kann eine finanzielle Optimierung in Reaktion auf solche Anreize zu einer Reduktion von insgesamt beim Betrieb des Stromnetzes verursachten Treibhausgas-Emissionen führen. Durch eine geeignete Gewichtung dieser unterschiedlichen Optimierungskriterien c1 und c2 kann ein günstiger Trade-Off zwischen einem insgesamt energieeffizienten Betrieb und der Nutzung einer zur Verfügung stehenden zeitlichen Flexibilität aufgefunden werden.

In Schritt c) des Verfahrens wird eine Extremalisierung dieser Zielfunktion durchgeführt, also eine Minimierung oder Maximierung, je nach Vorzeichen der enthaltenen Zielterme. Dabei werden die Betriebsparameter des Temperierungssystems 5 variiert, und es werden jeweils die erwarteten Werte der Zielfunktion Z auf Grundlage des thermischen Modells M computergestützt berechnet. Diese Vorhersage kann auf einer zeitlichen Diskretisierung beruhen, also eine Aufteilung in diskrete Zeitschritte beinhalten. Die Optimierung kann wegen der vergleichsweise einfachen und überwiegend linearen Zusammenhänge der zugrundeliegenden Gleichungen (1) und (2) mit verhältnismäßig geringem Rechenaufwand erfolgen. So kann z.B. ein Verfahren der gemischt-ganzzahligen Optimierung, insbesondere der gemischt-ganzzahligen linearen Optimierung zum Einsatz kommen, welches in der Fachwelt hinreichend bekannt ist und besonders effizient zur Lösung solcher einfachen Optimierungsprobleme herangezogen wird. Als Ergebnis der Optimierung ergibt sich ein Gesamt-Betriebsparametersatz P für das ganze Temperierungssystem 5, welcher Teil-Betriebsparametersätze für die einzelnen enthaltenen Temperierungsgeräte 11, 21 enthält. In Schritt d) wird das Temperierungssystem mit dem so ermittelten übergeordneten Betriebsparametersatz P betrieben. Der Ablauf der einzelnen Schritte a) bis d) muss dabei nicht so streng sequenziell erfolgen, wie dies in Figur 3 dargestellt ist. Insbesondere kann Schritt c) immer wieder durchgeführt werden, um optimale Betriebsparametersätze P für bestimmte zukünftige Zeitabschnitte im Voraus zu berechnen, welche dann in Schritt d) für diese Zeitabschnitte umgesetzt werden. Dementsprechend werden die Schritte c) und d) immer wieder und zum Teil auch zeitlich überlappend durchlaufen. Schritt a) kann optional eine Ermittlung der zugrundeliegenden Modellparameter wie z.B. der Wärmeübertragungskoeffizienten und relativen Anteile der Wärmeeinträge umfassen. Diese Werte können (als Teilschritt von a) oder in einem zusätzlichen Schritt) auf Basis von Sensordaten ermittelt werden und gegebenenfalls im laufenden Betrieb aktualisiert werden. Auch andere Größen wie z.B. die Sonneneinstrahlung und die tatsächlichen Temperaturverläufe $\theta_a$ und $\theta_m$ können im laufenden Betrieb kontinuierlich oder zumindest gelegentlich durch Messung neu ermittelt werden. Diese hier nicht gesondert dargestellten Messungen führen also zu laufenden Anpassungen von Parametern in dem thermischen Modell M.

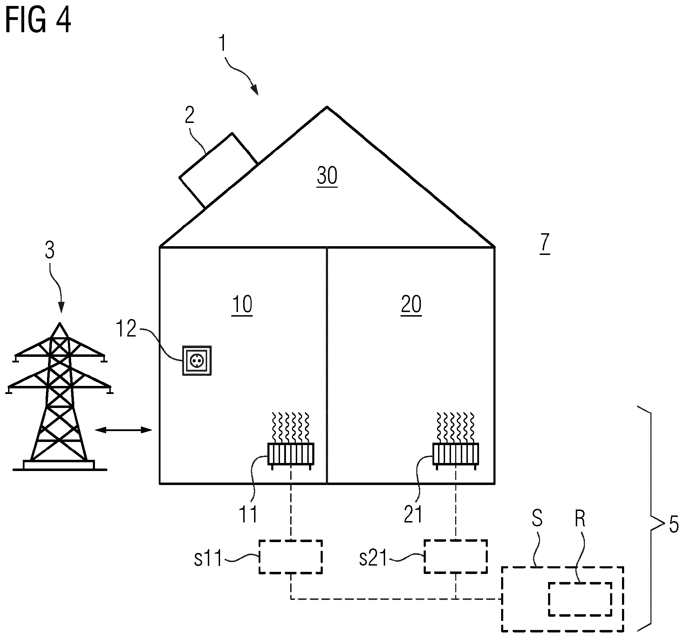

Figur 4 zeigt eine erweiterte Darstellung des Gebäudes 1 der Figur 1. Hier ist gezeigt, dass das Temperierungssystem 5 zur Umsetzung des erfindungsgemäßen Betriebsverfahrens eine zentrale Steuereinheit S aufweisen kann. Diese zentrale Steuereinheit S kann auch als Energiemanagementsystem (EMS) bezeichnet werden. Innerhalb dieser zentralen Steuereinheit S können die Schritte a) bis c) ausgeführt werden. Dazu kann diese Steuereinheit insbesondere eine integrierte Recheneinheit R aufweisen oder zumindest mit einer solchen Recheneinheit R verbunden sein. Um die separate Steuerbarkeit der einzelnen Temperierungsgeräte 11 und 21 zu ermöglichen, können diese jeweils mit zugeordneten Steuergeräten s11 bzw. s21 verbunden sein. Diese zugeordneten Steuergeräte s11 bzw. s21 können auch in die jeweiligen Temperierungsgeräte 11 bzw. 21 integriert sein bzw. können sie lokal in deren Umgebung angeordnet sein. Die gestrichelten Linien und Kästchen skizzieren also nur die Hierarchie des Kontrollflusses und nicht die räumliche Anordnung der Elemente s11, s21 und S. Die übergeordnete Steuereinheit S kann entsprechend auch innerhalb des Gebäudes 1 angeordnet sein. Diese übergeordnete Steuereinheit S kann an jedes lokale Steuergerät s11 bzw. s21 den zugehörigen optimierten Teil-Betriebsparametersatz übermitteln, der dann bei der lokalen Steuerung des zugehörigen Temperierungsgeräts 11 bzw. 21 umgesetzt wird.

Bezugszeichenliste

| | |
|---|---|
| 1 | Gebäude |
| 2 | Photovoltaik-Anlage |
| 3 | Stromnetz |
| 5 | Temperierungssystem |
| 7 | Umgebung |
| 8 | passiver Bereich |
| 10 | erste temperierbare Zone |
| 11 | Heizgerät der ersten Zone |
| 12 | Betriebsmittel der ersten Zone |
| 13 | interne Wärmequelle(n) |
| 14 | Fenster bzw. Außentür |
| 15 | Außenwand |
| 16 | Strahlungsquelle |
| 20 | zweite temperierbare Zone |
| 21 | Heizgerät der zweiten Zone |
| a | Raumluft der betrachteten Zone |
| m | thermische Masse der betrachteten Zone |
| M | thermisches Modell |
| P | Gesamt-Betriebsparametersatz |
| T1-T11 | Wärmeübertragungswege |
| R | Recheneinheit |
| S | zentrale Steuereinheit |
| s11,s21 | Steuergeräte |
| z | benachbarte Zone |
| Z | Zielfunktion |

**Patentansprüche**

1. Verfahren zum Betrieb eines Temperierungssystems (5) für ein Gebäude (1),

   wobei das Temperierungssystem (1) eine Mehrzahl von unabhängig voneinander steuerbaren Temperierungsgeräten (11,21) umfasst,
   wobei das Verfahren die folgenden Schritte umfasst:

      a) Bereitstellen eines thermischen Modells (M) des Gebäudes (1), wobei das Gebäude (1) in dem Modell (M) in eine Mehrzahl von Zonen (10,20) unterteilt ist, denen jeweils wenigstens ein Temperierungsgerät (11,21) zugeordnet ist,

wobei das thermische Modell (M) geeignet ist, für die jeweilige Zone (10,20) in Abhängigkeit von einem zeitabhängigen Betriebsparametersatz (P) des Temperierungssystems (5) ein zeitabhängiges Raumtemperaturprofil vorherzusagen,
wobei die zur jeweiligen Zone (10,20) zugehörigen Gebäudeteile in dem thermischen Modell (M) jeweils durch wenigstens eine separate thermische Masse (m) mit einer Wärmekapazität ($C_m$) repräsentiert sind,

b) Bereitstellen einer Zielfunktion (Z) für ein Optimierungsverfahren, wobei die Zielfunktion (Z) wenigstens ein Optimierungskriterium (c2) enthält, welches direkt oder indirekt von zeitlichen Verläufen von Leistungsaufnahmen der Temperierungsgeräte (11,21) abhängt,
c) Extremalisieren der Zielfunktion (Z) auf Basis von computergestützt ermittelten Vorhersagewerten auf Grundlage des thermischen Modells (M), wodurch ein optimierter zeitabhängiger Betriebsparametersatz (P) erhalten wird, sowie
d) Betrieb der Temperierungsgeräte (11,21) des Temperierungssystems (5) gemäß dem optimierten zeitabhängigen Betriebsparametersatz (P).

2. Verfahren nach Anspruch 1, bei welchem das Extremalisieren in Schritt c) unter der Randbedingung erfolgt, dass für die jeweilige Zone (10,20) ein vorgegebenes zeitabhängiges Raumtemperaturprofil innerhalb vorgegebener Grenzen eingehalten wird.

3. Verfahren nach einem der Ansprüche 1 oder 2, bei welchem das Temperierungssystem (5) zu jedem Temperierungsgerät (11,21) ein zugeordnetes Steuergerät (s11,s21) umfasst und ferner ein übergeordnetes Steuerungssystem (S) zur Ansteuerung dieser Steuergeräte (s11,s21) umfasst,
wobei der optimierte zeitabhängige Betriebsparametersatz (P) des Temperierungssystems eine Mehrzahl von zeitabhängigen Teil-Betriebsparametersätzen für die einzelnen Temperierungsgeräte (11,21) umfasst, welche von dem übergeordneten Steuerungssystem (S) an die zugehörigen Steuergeräte (s11,s21) der einzelnen Temperierungsgeräte (11,21) übermittelt werden.

4. Verfahren nach einem der vorhergehenden Ansprüche, bei welchem die Zielfunktion (Z) ein Optimierungskriterium (c1) enthält, welches eine Energieeffizienz bei der Erreichung von vorgegebenen Raumtemperaturprofilen für die jeweiligen Zonen (10,20) abbildet,
und wobei die Zielfunktion (Z) wenigstens ein zusätzliches Optimierungskriterium (c2) enthält, welches direkt oder indirekt von zeitlichen Verschiebungen von Leistungsaufnahmen der Temperierungsgeräte (11,21) abhängt.

5. Verfahren nach einem der vorhergehenden Ansprüche, bei welchem das Optimierungskriterium (c2) die Optimierung einer Übereinstimmung der zeitabhängigen Leistungsaufnahme des Energiesystems (5) mit einem vorgegebenen und/oder zumindest näherungsweise bekannten Soll-Leistungsprofil abbildet.

6. Verfahren nach einem der vorhergehenden Ansprüche, bei welchem das Gebäude (1) an ein Stromnetz (3) angeschlossen ist,
wobei das Optimierungskriterium (c2) die Optimierung einer Bereitstellung von Systemdienstleistungen für das Stromnetz (3) abbildet.

7. Verfahren nach einem der vorhergehenden Ansprüche, bei welchem das Gebäude (1) an ein Stromnetz (3) angeschlossen ist,
wobei das Optimierungskriterium (c2) eine Minimierung eines Kaufpreises für den Zukauf benötigter elektrischer Energie umfasst.

8. Verfahren nach einem der vorhergehenden Ansprüche, bei welchem das Gebäude (1) mit einem lokalen Erzeuger (2) für elektrische Energie verbunden ist,

wobei das Optimierungskriterium (c2) eine Maximierung des Eigenverbrauchs von lokal erzeugter elektrischer Energie umfasst und/oder
wobei das Optimierungskriterium (c2) einen Preis für den Verkauf von lokal erzeugter elektrischer Energie umfasst.

9. Verfahren nach einem der vorhergehenden Ansprüche, bei welchem innerhalb des thermischen Modells (M) eine Ausgeglichenheit der thermischen Energiebilanz für die thermische Masse (m) der jeweiligen Zone (10) zugrunde gelegt ist,
wobei insbesondere jeweils die folgenden Beiträge in dieser thermischen Energiebilanz berücksichtigt sind:

- Wärmeübertragungen (T1) zu den entsprechenden thermischen Massen (m) benachbarter Zonen (z),
- eine Wärmeübertragung (T2) durch Wärmeleitung zur Umgebung (7) des Gebäudes (1),
- eine Wärmeübertragung (T3) zu einer Innenluft (a) der jeweiligen Zone (10),
- ein anteiliger Wärmeeintrag (T4) durch das wenigstens eine zugeordnete Temperierungsgerät (11),
- ein anteiliger Wärmeeintrag (T5) durch Wärmestrahlung von einer äußeren Strahlungsquelle (16),
- ein anteiliger Wärmeeintrag (T6) durch weitere Wärmequellen (13) innerhalb der jeweiligen Zone (10) sowie
- eine Änderung der in der der thermischen Masse (m) enthaltenen thermischen Energie.

10. Verfahren nach einem der vorhergehenden Ansprüche, bei welchem innerhalb des thermischen Modells (M) eine Ausgeglichenheit der thermischen Energiebilanz für die Innenluft (a) der jeweiligen Zone (10) zugrunde gelegt ist,
wobei insbesondere jeweils die folgenden Beiträge in dieser thermischen Energiebilanz berücksichtigt sind:

- eine Wärmeübertragung (T7) an die Außenluft (7) durch Luftaustausch,
- eine Wärmeübertragung (T3) von der thermischen Masse (m) der jeweiligen Zone (10),
- ein anteiliger Wärmeeintrag (T8) durch das wenigstens eine zugeordnete Temperierungsgerät (11),
- ein anteiliger Wärmeeintrag (T9) durch Wärmestrahlung von einer äußeren Strahlungsquelle (16),
- ein anteiliger Wärmeeintrag (T10) durch weitere Wärmequellen (13) innerhalb der jeweiligen Zone (10).

11. Verfahren nach einem der vorhergehenden Ansprüche, bei welchem das Bereitstellen des thermischen Modells (M) die Vorgabe von Werten für ein oder mehrere der folgenden Größen für die jeweilige Zone (10) beinhaltet:

- Koeffizienten ($H_{tr,z}$)) für die Wärmeübertragung zwischen der thermischen Masse (m) der jeweiligen Zone (10) und den entsprechenden thermischen Massen benachbarter Zonen (z) und/oder der Umgebung (7),
- einen Koeffizienten ($H_{ma}$) für die Wärmeübertragung von der thermischen Masse (m) der jeweiligen Zone (10) zur Innenluft (a) der jeweiligen Zone (10),
- einen relativen Anteil ($\xi_{m,h}$) für den Wärmeeintrag durch das wenigstens eine zugehörige Temperierungsgerät (11) in die thermische Masse (m) der jeweiligen Zone (10),
- einen relativen Anteil ($\xi_{m,sol}$) für den Wärmeeintrag durch Wärmestrahlung von einer äußeren Strahlungsquelle (16) in die thermische Masse (m) der jeweiligen Zone (10),
- einen relativen Anteil ($\xi_{m,int}$) für den Wärmeeintrag durch weitere Wärmequellen (13) innerhalb der jeweiligen Zone (10) in die thermische Masse (m) der jeweiligen Zone (10),
- eine effektive Wärmekapazität ($C_m$) für die thermische Masse (m) der jeweiligen Zone (10),
- einen Koeffizienten ($H_{ve}$) für eine Wärmeübertragung an die Außenluft durch Luftaustausch,
- einen relativen Anteil ($\xi_{a,h}$) für den Wärmeeintrag durch das wenigstens eine zugehörige Temperierungsgerät (11) in die Innenluft (a) der jeweiligen Zone (10),
- einen relativen Anteil ($\xi_{a,sol}$) für den Wärmeeintrag durch Wärmestrahlung von einer äußeren Strahlungsquelle (16) in die Innenluft (a) der jeweiligen Zone (10) sowie
- einen relativen Anteil ($\xi_{a,int}$) für den Wärmeeintrag durch weitere Wärmequellen (13) innerhalb der jeweiligen Zone (10) in die Innenluft (a) der jeweiligen Zone (10).

12. Verfahren nach Anspruch 11, wobei das Temperierungssystem (5) eine Vielzahl von Sensoren aufweist und wobei die Vorgabe der Werte für die genannten Größen auf der Basis von Messwerten dieser Sensoren erfolgt.

13. Verfahren nach einem der vorhergehenden Ansprüche, bei welchem die Ermittlung der Vorhersagewerte auf einer zeitlichen Diskretisierung des Zeitverhaltens der Wärmeübertragungen beruht.

14. Verfahren nach einem der vorhergehenden Ansprüche, bei welchem zumindest eine Teilmenge der Temperierungsgeräte (11,21) elektrische Temperierungsgeräte, insbesondere elektrische Direktheizgeräte, sind.

15. Temperierungssystem (5) für ein Gebäude (1), welches eine Mehrzahl von unabhängig voneinander steuerbaren Temperierungsgeräten (11,21) umfasst, und welches eine zentrale Steuereinheit (S) umfasst, die zur Ausführung des Verfahrens nach einem der vorhergehenden Ansprüche ausgelegt ist.

# FIG 1

FIG 2

FIG 3

a) M

b) $Z = w1(c1) + w2(c2) + ...$

c)

d) $P \longrightarrow$

FIG 4

Europäisches Patentamt
European Patent Office
Office européen des brevets

# EUROPÄISCHER RECHERCHENBERICHT

Nummer der Anmeldung

EP 24 15 8343

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/160596 A1 (ELBSAT MOHAMMAD N [US]) 25. Mai 2023 (2023-05-25) | 1-3,5-15 | INV. G05D23/19 |
| A | * Absätze [0002] - [0013], [0104] - [0131]; Abbildungen 8, 9A, 9B * | 4 | |
| | ----- | | |
| X | EP 3 286 501 B1 (GREEN POWER LABS INC [CA]) 11. November 2020 (2020-11-11) | 1-3,5-15 | |
| A | * Absätze [0052] - [0089]; Abbildungen 4, 7,8 * | 4 | |
| | ----- | | |
| X | US 2021/148592 A1 (TURNEY ROBERT D [US] ET AL) 20. Mai 2021 (2021-05-20) * Absätze [0070] - [0093]; Abbildung 7 * | 1,15 | |
| | ----- | | |

RECHERCHIERTE SACHGEBIETE (IPC)

G05D

Der vorliegende Recherchenbericht wurde für alle Patentansprüche erstellt

| Recherchenort | Abschlußdatum der Recherche | Prüfer |
|---|---|---|
| München | 7. Juni 2024 | Etienne, Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 24 15 8343

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2024

| Im Recherchenbericht angeführtes Patentdokument | Datum der Veröffentlichung | Mitglied(er) der Patentfamilie | Datum der Veröffentlichung |
|---|---|---|---|
| US 2023160596 A1 | 25-05-2023 | KEINE | |
| EP 3286501 B1 | 11-11-2020 | CA 2982375 A1 | 27-10-2016 |
| | | EP 3286501 A1 | 28-02-2018 |
| | | HK 1251286 A1 | 25-01-2019 |
| | | US 2016305678 A1 | 20-10-2016 |
| | | WO 2016168910 A1 | 27-10-2016 |
| US 2021148592 A1 | 20-05-2021 | KEINE | |

EPO FORM P0461

Für nähere Einzelheiten zu diesem Anhang : siehe Amtsblatt des Europäischen Patentamts, Nr.12/82